# EUROPEAN PATENT SPECIFICATION

(11) **EP 4 684 186 B1**
(45) Date of publication and mention of the grant of the patent: **18.11.2026**
(21) Application number: 24713711.0
(22) Date of filing: 15.03.2024
(51) Int. Cl.: G01D 5/347, G01D 5/245, G01D 5/249

(54) **POSITION ENCODER APPARATUS**
POSITIONSKODIERUNGSVORRICHTUNG
APPAREIL DE CODAGE DE POSITION

(30) Priority: 20.03.2023 EP 23162803
(43) Date of publication of application: 28.01.2026
(73) Proprietor: Renishaw plc, Wotton-under-Edge, Gloucestershire GL12 8JR (GB)
(72) Inventor: GORDON-INGRAM, Iain, Robert, Wotton-under-Edge Gloucestershire GL12 8JR (GB); FISHER, Harrison, Clinton, Wotton-under-Edge Gloucestershire GL12 8JR (GB); GRIBBLE, Andrew, Paul, Wotton-under-Edge Gloucestershire GL12 8JR (GB)
(74) Representative: Dunn, Paul Edward
(86) International application number: PCT/GB2024/050709
(87) International publication number: WO 2024/194606

(56) References cited:
- WO-A2-2010/116144
- GB-A- 2 156 127
- US-A1- 2006 243 895
- US-A1- 2012 072 169
- US-A1- 2018 216 972
- US-A1- 2019 170 570

## Description

The present invention relates to position encoder apparatus, and in particular to an improved encoder readhead that can extract positional information from an associated encoder scale at a faster rate.

Position encoder apparatus for measuring the relative position between two moveable objects is known. Typically, an encoder scale comprising a series of markings is provided on one object and a readhead for reading those markings is provided on the other object. A position encoder is typically categorised as being an incremental position encoder or an absolute position encoder. In an incremental position encoder, the scale has a series of periodic scale markings that are detected by the readhead. Any incremental movement of the scale relative to the readhead is measured to allow changes in relative position to be established, often with an accuracy much greater than the period of the scale markings. In an absolute encoder, the readhead measures relative displacement by detecting a unique series of scale markings (e.g., codes) and translating those codes into an absolute position. This typically provides lower resolution measurements than incremental encoders, but it has the advantage that the absolute position of the readhead relative to the scale is unambiguously known. It is also known to provide an encoder arrangement in which an absolute scale track is used with an incremental scale track. This allows the higher positional resolution of incremental encoders to be combined with the benefits of absolute position measurement. In other words, higher accuracy incremental position measurements can be used to "fine tune" absolute position measurements.

US7499827 describes embedding absolute position data in an incremental scale by removing scale lines. The scale overall remains sufficiently periodic to provide incremental information, but it is also possible to detect the omitted scale lines and thereby extract codewords that define absolute position information. WO2010/116144 describes how such a scale can be read by taking snapshot images of the scale. In particular, a CMOS image sensor is described that comprises a linear array of pixels and is configured to output an image of the scale, on demand, to a central processing unit. The central processing unit then analyses the received image to extract both absolute and incremental position information. An arrangement of this type is used in the so-called "RESOLUTE" range of optical encoders that are currently sold by Renishaw plc, Wotton-Under-Edge, UK.

The present inventors have appreciated that the above-described arrangement provides a compact and reliable encoder, but that reading data from the image sensor can place an upper limit on the speed with which positional information can be reliably extracted.

According to a first aspect of the present invention, there is provided an encoder readhead for reading an encoder scale, the encoder readhead comprising;
a detector having a plurality of sensor elements that generate a plurality of analogue sensor signals,
a digitiser for converting the plurality of analogue sensor signals into digitised sensor values, and
an incremental position generator configured to receive the digitised sensor values and to generate therefrom an incremental position output,
characterised in that the digitiser comprises a plurality of analogue-to-digital convertors and the incremental position generator receives a plurality of the digitised sensor values from the plurality of analogue-to-digital convertors in parallel.

The present invention thus relates to an encoder readhead that is configured to read an associated encoder scale. The encoder scale may comprise an incremental scale or it may comprise a combined incremental and absolute scale. The readhead includes a detector that comprises multiple sensor elements that generate multiple analogue sensor signals. For example, the detector may comprise an optical detector having a linear (one-dimensional) array of N optical sensor elements (pixels) that generate N analogue sensor signals that describe the intensity of light received by each of the sensor elements and thus providing a one-dimensional image of the encoder scale. The readhead may also include appropriate elements (e.g., light sources, beam-splitters, lenses, etc) for reading the associated encoder scale. For example, optical components may be provided that allow an image of the encoder scale to be formed at the detector.

A digitiser is also provided for converting the plurality of analogue sensor signals output by the sensor elements of the detector into digitised sensor values. For an optical detector, each digitised sensor value is thus a digital representation of the received light intensity at each of the sensor elements. These digitised sensor values are received by the incremental position generator and used to generate an incremental position. For example, a set of such digitised sensor values may provide a digital image (e.g., a one-dimensional digital image) of an associated encoder scale that can be analysed to extract position information. As explained below, the calculated incremental position may be combined with coarser absolute position information to provide a resultant position value that is output by the readhead.

The invention is characterised by the digitiser comprising a plurality of analogue-to-digital convertors, instead of the single analogue-to-digital convertor found in prior art readheads of the type described in WO2010/116144. This enables the incremental position generator to receive a plurality of digitised sensor values in parallel rather than in series. In a preferred embodiment, there are provided N sensor elements and N analogue-to-digital convertors so that the analogue sensor signals can all be digitised together (i.e., in parallel). This greatly increases the speed of digitisation compared to the prior art (e.g., by approximately N times) thereby allowing a digitised image captured by the detector to be passed to the incremental position generator more quickly than was previously possible using a (serial) video signal. This, in turn, enables the incremental position to be generated more quickly than was previously possible. Reducing the total time taken to calculate a position from a digitised image is advantageous because it results in a more accurate estimate of position. During the calculation time, the encoder continues to move relative to the encoder scale and this motion is not necessarily at a constant velocity. The movement during the calculation time can therefore be unpredictable, resulting in a measurement error. However, reducing the time taken to calculate a position reduces this measurement error. In particular, it has been found that halving the calculation time will typically reduce the error in displacement by a factor of four. The present invention thus provides an encoder readhead having improved measurement accuracy.

Advantageously, the detector and the plurality of analogue-to-digital convertors are provided on a first microchip. The term microchip refers to an integrated circuit chip that may be attached to a printed circuit board (PCB) or the like. The incremental position generator may also be provided on the first microchip. In other words, the detector (i.e., the plurality of sensor elements) can be formed on the same microchip substrate (i.e., the first microchip) on which the plurality of analogue-to-digital convertors and the incremental position generator are also formed. The digitisation and/or incremental position calculation circuitry can thus be added to the detector chip. This arrangement allows analogue sensor signals from the sensor elements to be routed to adjacent ADCs via multiple dedicated signal lines formed on the microchip, removing the need for cabling or serial busses to carry such signals. High speed digitisation of the analogue sensor signals is thus possible, along with rapid calculation of the incremental position. This allows position to be calculated more quickly than previously.

The digitiser may comprise N analogue-to-digital convertors and the detector may comprise N sensor elements, where N is an integer value of two or more. One analogue-to-digital converter may thus be provided per sensor element. In other words, one analogue-to-digital convertor of the plurality of analogue-to-digital convertors may be provided for each sensor element of the plurality of sensor elements. This allows the analogue sensor signals from all of the plurality of sensor elements to be digitised in parallel (i.e., by the associated ADC). It would also be possible for there to be fewer ADCs than sensor elements. For example, the digitiser may comprise N analogue-to-digital convertors and the detector may comprise M sensor elements, where N is an integer value of two or more and M is greater than N (with M preferably being an integer multiple of N). For example, one ADC could be shared by two or more of the sensor elements. This would require analogue signals provided to each ADC to be digitised in series, but overall this would still be faster than using only a single ADC for digitising all the analogue signals.

Advantageously, the incremental position generator is configured to calculate the incremental position output from the plurality of digitised sensor values using at least one lookup table or function. The incremental position extractor may be configured to use frequency analysis to analyse the captured image. More specifically, spatial frequency analysis may be used to analyse the captured image. In particular, the incremental position generator may conveniently implement a spatial frequency transform to generate the incremental position output. Conveniently, the spatial frequency transform is a discrete Fourier transform. In other words, the incremental position extractor may use a Fourier analysis technique to analyse the captured image. The incremental position generator may include a memory for storing sine and cosine look-up tables that implement the discrete Fourier transform, the digitised sensor values being multiplied by the coefficients of the sine and cosine look-up table to provide the incremental position output. In other words, the sensor output values may be multiplied by values in a cosine lookup table and summed to provide a real value and the same sensor output values may be multiplied by values in a sine lookup table and summed to provide an imaginary value. The real and imaginary values may then be used together to provide the global phase value. The incremental position output of the incremental position generator may thus comprise real and imaginary phase components (e.g., quadrature phase sine/cosine signals) or a global phase value may be calculated.

A weighting (e.g., a windowing function) may be applied to the digitised sensor values. This weighting may be applied before the digitised sensor values are received by the incremental position generator. This weighting may be applied by the incremental position generator. For example, a look-up table may be used to weight the digitised sensor values, or weightings may be applied to values in the look-up tables (such as the sine and cosine look-up tables) that are used by the incremental position generator. In other words, the plurality of digitised sensor values are conveniently weighted or scaled.

The encoder readhead preferably also comprises an absolute position generator. The absolute position generator may be arranged to receive the digitised sensor values in series. The digitised sensor values may then be analysed by the absolute position generator and an absolute position output generated. The absolute position generator may operate in the same manner as prior art readheads, albeit with the digitised image of the scale being produced by the plurality of ADCs instead of a single ADC. The calculation of absolute position may thus occur at a slower rate than the calculation of incremental position.

In a preferred embodiment, a first microchip comprises the detector, the plurality of analogue-to-digital convertors and the incremental position processor, and a second microchip comprises the absolute position generator. In other words, the absolute position calculations may be performed on a (second) microchip that is different to the (first) microchip on which the detector, digitiser and incremental position generator are formed. The first and second microchips may be physically separated from each other, with electrical connections (e.g., wires) between them. A serial data bus or link may be used to pass the plurality of digitised sensor values from the first microchip to the second microchip. The first and second microchips may be manufactured from different wafers or using different manufacturing techniques. For example, the first microchip may comprise a CMOS microchip (which would be highly suited to providing an optical detector). The second microchip may be an Application-Specific Integrated circuit (ASIC) or a field-programmable gate array (FPGA) etc, which are typically lower cost and more readily re-configurable than CMOS microchips.

The encoder readhead, and hence the associated scale, may sense any suitable type of radiation (e.g., the encoder apparatus may be magnetic, inductive, optical etc). Advantageously, an optical encoder readhead is provided for reading an optical encoder scale. The detector may thus advantageously comprise an optical detector having an array of light sensing elements. The light sensing elements may be arranged in a regular array, or an irregular array. The light sensing elements may all be the same size. Alternatively, the light sensing elements may be different sizes (e.g., to implement a weighted optical detection function). Preferably, the optical detector comprises a one-dimensional optical detector array. The readhead may also include a light source. The readhead may be configured to acquire snapshot images (e.g., one-dimensional images) of the associated encoder scale. Conveniently, the optical detector may be formed using a complementary metal-oxide-semiconductor (CMOS) technology. In other words, the first microchip may be a CMOS microchip.

According to an example not belonging to the claimed invention, there is provided an encoder readhead for reading an encoder scale, the encoder readhead comprising; a detector array having a plurality of sensor elements that generate a plurality of analogue sensor signals, processing circuitry for converting the plurality of analogue sensor signals into a plurality of digitised sensor values and generating an incremental position output from the plurality of digitised sensor values, characterised in that the detector array and processing circuitry are formed on a single microchip. The readhead may include any of the features, alone or in combination with other features, that are described herein.

According to another example not belonging to the claimed invention, there is provided an encoder readhead for reading an encoder scale, the encoder readhead comprising; a detector array having a plurality of sensor elements, each of the plurality of sensor elements generating an analogue sensor signal, and a plurality of analogue-to-digital convertors, each of the plurality of analogue-to-digital convertors being configured to convert an analogue sensor signal into a digitised sensor value, wherein each sensor element outputs its analogue signal to a different one of the plurality of analogue-to-digital converters such that the plurality of analogue signals are converted into a plurality of digitised sensor values in parallel. The readhead may include any of the features, alone or in combination with other features, that are described herein.

Also described herein is an encoder readhead. The encoder readhead may be for reading an encoder scale. The encoder readhead may comprises a detector. The detector may comprise a plurality of sensor elements. The plurality of sensor elements may generate a plurality of analogue sensor signals. A digitiser may be provided. The digitiser may convert the plurality of analogue sensor signals into digitised sensor values. The readhead may also include an incremental position generator. The incremental position generator may be configured to receive the digitised sensor values. The incremental position generator may be configured to generate an incremental position output (e.g., from the received digitised sensor values). The digitiser may comprise a plurality of analogue-to-digital convertors.

The incremental position generator may be configured to receive a plurality of the digitised sensor values from the plurality of analogue-to-digital convertors in parallel. The readhead may include any of the features, alone or in combination with other features, that are described herein.

Another example not belonging to the claimed invention also extends to encoder apparatus comprising an encoder readhead as described above and an encoder scale.

The invention will now be described, by way of example only, with reference to the accompanying drawings in which;
Figure 1 shows a prior art encoder readhead arrangement,
Figure 2 is a schematic diagram of a prior art encoder readhead,
Figure 3 illustrates the electrical components of the prior art encoder readhead of figure 2, and
Figure 4 illustrates the electronics of a readhead of the present invention.

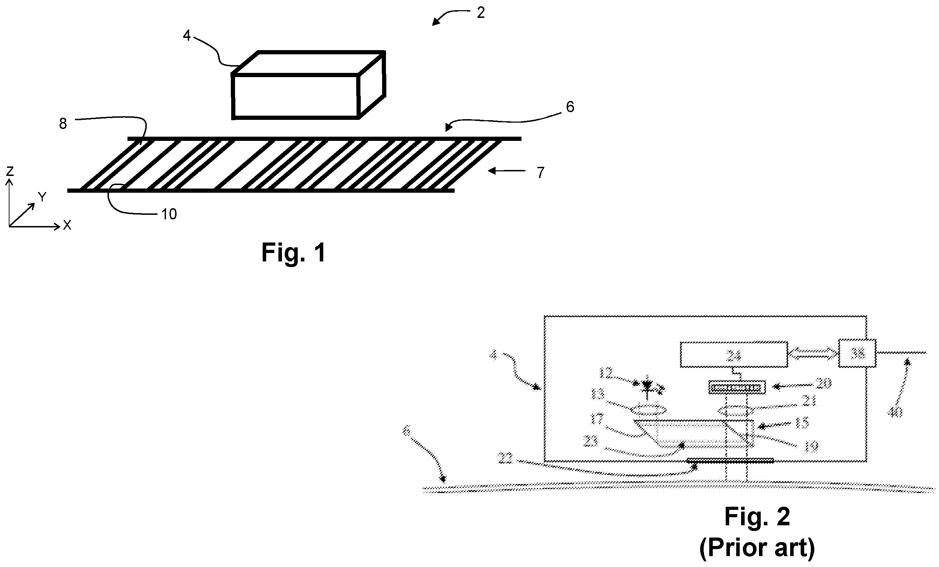

Referring to figure 1 there is shown a general view of an encoder apparatus 2 comprising a readhead 4 and a scale 6. The readhead 4 and scale 6 are, in use, mounted to first and second objects respectively (not shown). The readhead 4 is moveable back and forth along the scale 6. In particular, the readhead 4 is moveable relative to the scale 6 along the x-axis illustrated in the drawing.

The scale 6 is an absolute scale that comprises a scale track 7 comprising a series of scale lines that extend perpendicularly to the x-direction of readhead motion; i.e., the scale lines extend along the y-axis indicated in the drawing. In this example, the scale lines comprise a series of reflective lines 8 and non-reflective lines 10. The reflective lines 8 and non-reflective lines 10 are generally arranged in an alternate manner at a predetermined period. However, select non-reflective lines 10 are omitted from the scale track 7 to encode absolute position data in the track 7. For example, the presence of a non-reflective line can be used to represent a "1"-bit and the absence of a non-reflective line can represent a "0"-bit. The encoded absolute position data can be provided in the form of a pseudorandom sequence or discrete codewords.

Figure 2 shows the internal components of a prior art readhead 4 in more detail. The readhead 4 comprises a light source in the form of a Light Emitting Diode ("LED") 12, a collimating lens 13, a beam splitter assembly 15 having a reflecting face 17 and a beam splitting face 19. An imaging lens 21 and a Complementary Metal-Oxide-Semiconductor ("CMOS") image sensor 20 are also provided.

In use, the collimating lens 13 collimates light emitted from the LED 12 into a beam 23 which is then reflected by the splitter assembly's reflecting face 17 toward the beam splitting face 19. The beam splitting face 19 reflects the beam 23 toward the scale 6 via a window 22. Light reflected from the scale 6 passes back through the window 22 and towards the beam splitting face 19, which allows the reflected light to pass straight through it. The reflected light then passes through an imaging lens 21 which forms an image of the scale 6 on the image sensor 20.

In the present example, the CMOS image sensor 20 is a one-dimensional sensor array formed on a single microchip. In particular, the CMOS image sensor 20 comprises a single row of 256 elongate pixels (sensor elements) whose length extend parallel to the length of the reflective 8 and non-reflective lines 10. The image sensor 20 microchip also includes electronics for sequentially reading out light intensity data (i.e., analogue sensor signals) from the row of pixels and generating an analogue video signal for outputting the analogue sensor signal. The analogue video output from the CMOS image sensor microchip thus provides a serial stream of analogue sensor signals from the 256 pixels.

A signal processing circuit 24 receives the analogue video signal from the image sensor 20. The signal processing circuit 24 includes a single analogue-to-digital converter that converts the stream of analogue sensor signal into a stream of digitised sensor values. The signal processing circuit 24 is configured to analyse the digitised scale image and an interface 38 outputs the calculated positional information on a data bus 40.

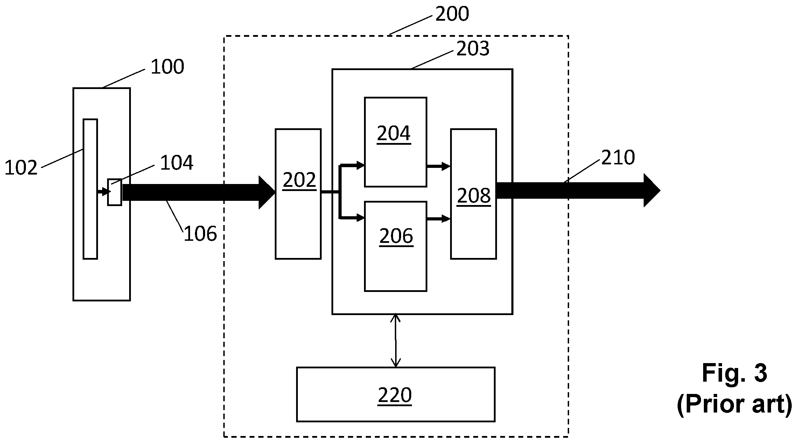

Referring to figure 3, there is provided a functional diagram illustrating in more detail the electronic layout of a prior art readhead of the type described with reference to figure 2.

The readhead comprises a detector microchip 100 that includes a linear imaging array 102 having 256 pixels. The detector microchip 100 also includes video readout circuitry 104 for sequentially reading measured light intensity from the array of pixels 102 and generating an analogue video output signal that comprises a stream of analogue light intensity signals. A flexible wire 106 carries the video signal output by the video readout circuitry 104.

The readhead also includes a printed circuit board (PCB) 200 having various components for processing the video signal output from the detector microchip 100. The printed circuit board 200 has an analogue-to-digital convertor (ADC) 202 in the form of a microchip mounted thereon. The ADC 202 is connected to the wire 106 which carries the video signal from the detector microchip 100. The ADC 202 thus converts the received analogue video signal into a stream of digitised sensor values that describe the measured light intensity at each pixel of the array 102. In particular, the light intensity signals from each of the pixels of the imaging array 102 are converted into digital values in turn (i.e., one after another). Once all the signals from the 256 pixels have been digitised, a digitised one-dimensional image as captured by the imaging array 102 can be analysed to extract position information. As mentioned above, position information is calculated by analysing the same captured image in two different ways to extract incremental and absolute position information.

The captured image is analysed using a digital signal processor (DSP) 203 provided in the form of a discrete microchip that is mounted on the PCB 200. Conductive tracks formed on the PCB 200 carry the digitised sensor values from the ADC 202 to the DSP 203.

The DSP 203 is programmed to provide an incremental position generator 204 that uses a discrete Fourier transform (DFT) to determine incremental position information from the intensity pattern of the captured image. The real and imaginary components of the DFT allow a global phase of the captured image to be extracted by, for example, calculating the inverse tangent of the imaginary component divided by the real component. In this manner, a global phase value is calculated from all the information in the captured images thereby giving an incremental position value that is a fraction of the fundamental scale period. For example, if the encoder scale has a fundamental scale period of 30µm the calculated incremental position is a value between 0 and 30 µm, with a resolution of better than 1nm.

The DSP 203 is also programmed to provide an absolute position generator 206 which uses the global phase information from the incremental position generator 204 when analysing the captured image to locate the centre of each potential line on the scale. A correlation is then performed on the captured image at each of these locations to ascertain whether there is a dark line present or not. For example, if each captured image of the scale extends approximately 2mm in the direction of measurement this allows a 65-bit binary number to be extracted that corresponds to the scale pattern of the captured image (i.e., the image being of the portion of the scale directly below the readhead). A look-up table stored in a memory chip 220, also mounted to the PCB 200, can be used by the absolute position generator 206 to determine an absolute position value from the extracted binary number. It should be noted that only around a quarter of the 65-bits are required to define a unique position, with the remaining bits providing redundant information so that the correct position can be ascertained even if some of the scale is obscured. This process allows the readhead's absolute position to be found with an accuracy of within one scale period (e.g., to within 30µm for an encoder scale having a fundamental scale period of 30µm).

The DSP 203 is also programmed to provide a position combiner 208 that combines the coarse absolute position information (i.e., a whole number of scale periods) from the absolute position generator 206 with the global phase information (i.e., which has a resolution much smaller than the scale period) from the incremental position generator 204 to produce a high-resolution absolute position value that is output from the PCB 200 via an output signal line 210 using a standard encoder output protocol. It should be noted that absolute position values may be output periodically or on request, as required.

The prior art arrangement described with reference to figure 3 allows position information to be generated in a reliable manner. However, the present inventors have recognised that the speed at which the position can be calculated can introduce measurement errors. Rather than simply attempting to speed up all the electronics used in the position measurement process, the present inventors have devised a new architecture that significantly increases the speed at which position can be calculated in a cost-effective way.

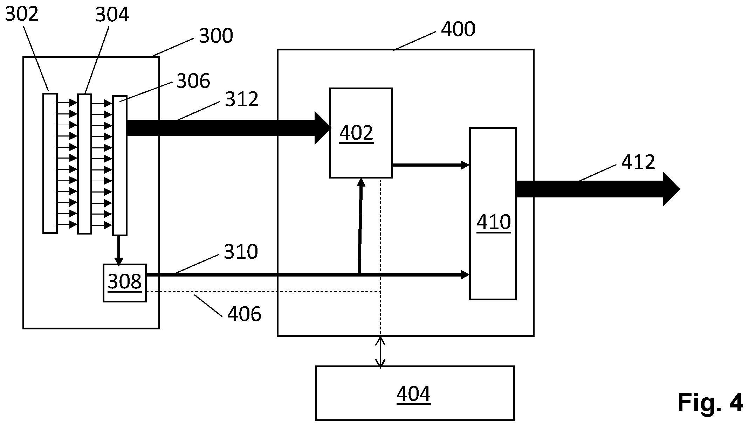

Referring to figure 4, there is provided a functional diagram illustrating the electronic layout of a readhead of the present invention. In this example, the optical arrangement (including the encoder scale) is unchanged from the prior art encoder systems described above but it would, of course, be possible to provide a readhead that has an alternative optical arrangement.

The encoder of the present invention comprises a first (CMOS) microchip 300 that includes a linear imaging array 302 having 512 pixels. An array of 512 ADCs 304 (which together provide a digitiser) is formed on the first microchip 300 adjacent to the 512 pixels of the imaging array 302. The analogue output from each of the pixels is fed to a corresponding input of one of the ADCs 304 by a dedicated electrical connection. In other words, the analogue sensor signals from the pixels are passed to corresponding ADCs in parallel. This allows the digitisation, in parallel, of all the analogue sensor signals from all the pixels of the imaging array 302. A set of 512 digitised sensor values are thus produced at high speed for each image that is acquired by the imaging array 302. The digitised sensor values are stored in a memory buffer 306.

The first microchip 300 also includes an incremental position generator 308. In other words, the incremental position generator 308 is provided on the same CMOS microchip that provides the linear imaging array 302. The incremental position generator 308 reads the sensor values from the memory buffer 306 and uses a discrete Fourier transform (DFT) to determine incremental position information from the intensity pattern of the captured image. The real and imaginary components of the DFT allow a global phase of the captured image to be extracted. For example, global phase could be determined by calculating the inverse tangent of the imaginary component divided by the real component, or by using a look-up table or a coordinate rotation digital computer (CORDIC) etc. In this manner, a global phase value is calculated from all the information in the captured images thereby giving an incremental position value that is a fraction of the fundamental scale period. Incremental position is output by the incremental position generator 308 over a first (incremental position) data bus 310. This incremental position may be output in any suitable form. For example, it may be output as sine and cosine (phase quadrature) signals. A second serial data bus 312 is provided for outputting the digitised sensor values from the memory buffer 306. This arrangement allows incremental position to be calculated by the incremental position generator 308 at a much higher rate than is possible in the prior art arrangement in which sensor values are digitised and passed to an incremental position generator in series.

A second microchip 400 is also provided. In this example, the second microchip comprises a Field-Programmable Gate Array (FPGA) microchip, but other types of microchip (e.g., an ASIC, a DSP etc) could be used instead. The second microchip comprises an absolute position generator 402 that reads the digitised sensor values stored in the memory buffer 306 over the second (serial) data bus 312. The incremental (global phase) information provided over the first data bus 310 is used to locate the centre of each potential line on the scale. As previously, a correlation is then performed on the captured image to ascertain whether there is a dark line present or not and to extract a binary number that corresponds to the scale pattern of the captured image. A look-up table stored in the memory 404 is used by the absolute position generator 402 to determine an absolute position value from the extracted binary number. It should be noted that the memory 404 may also include the Fourier coefficients used by the incremental position generator 308, which may be loaded into memory within the incremental position generator 308 in advance via a data bus 406. Although the incremental position generator 308 is shown indirectly connected to the memory 404 via the second microchip 400, it could instead be connected to the memory 404 directly or the memory could instead be incorporated into the first and/or second microchip. The second microchip 400 also includes a position combiner 410 that uses the coarse absolute position information (i.e., a whole number of scale periods) from the absolute position generator 402 with the incremental information (i.e., which has a resolution much smaller than the scale period) from the incremental position generator 308 to produce a high-resolution absolute position value that is output via the output line signal 412 using a standard encoder output protocol.

Unlike the prior art arrangement, the incremental information provided over the first data bus 310 can be produced and received at a much higher rate than the absolute position information calculated by the absolute position generator 402. This also allows the resultant position output by the position combiner 410 to be calculated more quickly. Incremental changes in position that occur between the calculation of new absolute position information can be used to update the resultant position output, thereby increasing the overall speed at which a relative scale and readhead position can be calculated. This increased speed of position calculation reduces the readhead measurement error by decreasing the effects of any acceleration or deceleration of the readhead relative to the scale during that calculation time. An improved accuracy encoder readhead is thus provided.

It should be remembered that the examples outlined above are merely representative of the present invention. A skilled person would appreciate the many alternative readhead configurations that would be possible in accordance with the present invention as defined by the appended claims.

## Claims

1. An encoder readhead for reading an encoder scale, the encoder readhead comprising;
a detector having a plurality of sensor elements (302) that generate a plurality of analogue sensor signals,
a digitiser for converting the plurality of analogue sensor signals into digitised sensor values, and
an incremental position generator (308) configured to receive the digitised sensor values and to generate therefrom an incremental position output,
**characterised in that** the digitiser comprises a plurality of analogue-to-digital convertors (304) and the incremental position generator (308) receives a plurality of the digitised sensor values from the plurality of analogue-to-digital convertors (304) in parallel.

2. An encoder readhead according to claim 1, wherein the detector, the plurality of analogue-to-digital convertors (304) and the incremental position generator (308) are provided on a first microchip (300).

3. An encoder readhead according to any preceding claim, wherein one analogue-to-digital converter (304) is provided per sensor element.

4. An encoder readhead according to any preceding claim, wherein the incremental position generator (308) is configured to calculate the incremental position output from the plurality of digitised sensor values using at least one lookup table or function.

5. An encoder readhead according to claim 4, wherein the incremental position generator (308) implements a spatial frequency transform to generate the incremental position output.

6. An encoder readhead according to claim 5, wherein the spatial frequency transform is a discrete Fourier transform.

7. An encoder readhead according to claim 6, wherein the incremental position generator (308) includes a memory for storing sine and cosine look-up tables that implement the discrete Fourier transform, the digitised sensor values being multiplied by the coefficients of the sine and cosine look-up table to provide the incremental position output.

8. An encoder readhead according to any preceding claim, wherein the plurality of digitised sensor values are weighted or scaled.

9. An encoder readhead according to any preceding claim, comprising an absolute position generator (402), the absolute position generator (402) being arranged to receive the digitised sensor values in series, analyse the digitised sensor values and generate an absolute position output.

10. An encoder readhead according to claim 9, wherein a first microchip (300) comprises the detector, the plurality of analogue-to-digital convertors (304) and the incremental position processor, and a second microchip comprises the absolute position generator (402).

11. An encoder readhead according to any preceding claim, wherein the detector comprises an optical detector having an array of light-sensing elements (302).

12. An encoder readhead according to claim 11, wherein the optical detector comprises a one-dimensional optical detector array, and the readhead is configured to acquire snapshot images of the encoder scale.

13. An encoder readhead according to any one of claims 10 to 11, wherein the optical detector is formed using a complementary metal-oxide-semiconductor , i.e. CMOS, technology.

## Patentansprüche

1. Kodierer-Lesekopf zum Lesen einer Kodierer-Skala, wobei der Kodierer-Lesekopf umfasst:
einen Detektor mit einer Vielzahl von Sensorelementen (302), die eine Vielzahl von analogen Sensorsignalen erzeugen,
einen Digitalisierer zum Umwandeln der Vielzahl von analogen Sensorsignalen in digitalisierte Sensorwerte, und
einen Inkrementalpositionsgenerator (308), der konfiguriert ist, um die digitalisierten Sensorwerte zu empfangen und daraus eine Inkrementalpositionsausgabe zu erzeugen,
**dadurch gekennzeichnet, dass** der Digitalisierer eine Vielzahl von Analog-Digital-Wandlern (304) umfasst und der Inkrementalpositionsgenerator (308) eine Vielzahl der digitalisierten Sensorwerte von der Vielzahl von Analog-Digital-Wandlern (304) parallel empfängt.

2. Kodierer-Lesekopf nach Anspruch 1, wobei der Detektor, die Vielzahl von Analog-Digital-Wandlern (304) und der Inkrementalpositionsgenerator (308) auf einem ersten Mikrochip (300) vorgesehen sind.

3. Kodierer-Lesekopf nach einem der vorhergehenden Ansprüche, wobei pro Sensorelement ein Analog-Digital-Wandler (304) bereitgestellt ist.

4. Kodierer-Lesekopf nach einem der vorhergehenden Ansprüche, wobei der Inkrementalpositionsgenerator (308) konfiguriert ist, um die Inkrementalpositionsausgabe aus der Vielzahl von digitalisierten Sensorwerten unter Verwendung mindestens einer Nachschlagetabelle oder -funktion zu berechnen.

5. Kodierer-Lesekopf nach Anspruch 4, wobei der Inkrementalpositionsgenerator (308) eine Ortsfrequenztransformation implementiert, um die Inkrementalpositionsausgabe zu erzeugen.

6. Kodierer-Lesekopf nach Anspruch 5, wobei die Ortsfrequenztransformation eine diskrete Fourier-Transformation ist.

7. Kodierer-Lesekopf nach Anspruch 6, wobei der Inkrementalpositionsgenerator (308) einen Speicher zum Speichern von Sinus- und Cosinus-Nachschlagetabellen umfasst, die die diskrete Fourier-Transformation implementieren, wobei die digitalisierten Sensorwerte mit den Koeffizienten der Sinus- und Cosinus-Nachschlagetabelle multipliziert werden, um die Inkrementalpositionsausgabe bereitzustellen.

8. Kodierer-Lesekopf nach einem der vorhergehenden Ansprüche, wobei die mehreren digitalisierten Sensorwerte gewichtet oder skaliert sind.

9. Kodierer-Lesekopf nach einem der vorhergehenden Ansprüche, umfassend einen Absolutpositionsgenerator (402), wobei der Absolutpositionsgenerator (402) angeordnet ist, um die digitalisierten Sensorwerte in Reihe zu empfangen, die digitalisierten Sensorwerte zu analysieren und eine Absolutpositionsausgabe zu erzeugen.

10. Kodierer-Lesekopf nach Anspruch 9, wobei ein erster Mikrochip (300) den Detektor, die Vielzahl von Analog-Digital-Wandlern (304) und den Inkrementalpositionsprozessor umfasst und ein zweiter Mikrochip den Absolutpositionsgenerator (402) umfasst.

11. Kodierer-Lesekopf nach einem der vorhergehenden Ansprüche, wobei der Detektor einen optischen Detektor mit einer Anordnung von Lichterfassungselementen (302) umfasst.

12. Kodierer-Lesekopf nach Anspruch 11, wobei der optische Detektor eine eindimensionale optische Detektoranordnung umfasst und der Lesekopf konfiguriert ist, um Schnappschussbilder der Kodierer-Skala zu erfassen.

13. Kodierer-Lesekopf nach einem der Ansprüche 10 bis 11, wobei der optische Detektor unter Verwendung einer Technologie mit komplementärem Metalloxid-Halbleiter, d.h. CMOS, gebildet ist.

## Revendications

1. Une tête de lecture de codeur pour lire une règle de codeur, la tête de lecture de codeur comprenant :
un détecteur ayant une pluralité d'éléments capteurs (302) qui génèrent une pluralité de signaux de capteurs analogiques,
un numériseur pour convertir la pluralité de signaux de capteurs analogiques en valeurs de capteurs numérisées, et
un générateur de position incrémentielle (308) configuré pour recevoir les valeurs de capteur numérisées et pour générer à partir de celles-ci une sortie de position incrémentielle,
**caractérisé en ce que** le numériseur comprend une pluralité de convertisseurs analogique-numérique (304) et le générateur de position incrémentielle (308) reçoit une pluralité des valeurs de capteur numérisées provenant de la pluralité de convertisseurs analogique-numérique (304) en parallèle.

2. Une tête de lecture de codeur selon la revendication 1, dans laquelle le détecteur, la pluralité de convertisseurs analogique-numérique (304) et le générateur de position incrémentielle (308) sont fournis sur une première puce (300).

3. Une tête de lecture de codeur selon l'une quelconque des revendications précédentes, dans laquelle un convertisseur analogique-numérique (304) est fourni par élément de capteur.

4. Une tête de lecture de codeur selon l'une quelconque des revendications précédentes, dans laquelle le générateur de position incrémentielle (308) est configuré pour calculer la sortie de position incrémentielle à partir de la pluralité de valeurs de capteur numérisées en utilisant au moins une fonction ou table de consultation.

5. Une tête de lecture de codeur selon la revendication 4, dans laquelle le générateur de position incrémentielle (308) met en œuvre une transformée de fréquence spatiale pour générer la sortie de position incrémentielle.

6. Une tête de lecture de codeur selon la revendication 5, dans laquelle la transformée de fréquence spatiale est une transformée de Fourier discrète.

7. Une tête de lecture de codeur selon la revendication 6, dans laquelle le générateur de position incrémentielle (308) comprend une mémoire pour stocker des tables de consultation sinus et cosinus qui mettent en œuvre la transformée de Fourier discrète, les valeurs de capteur numérisées étant multipliées par les coefficients de la table de consultation sinus et cosinus pour fournir la sortie de position incrémentielle.

8. Une tête de lecture de codeur selon l'une quelconque des revendications précédentes, dans laquelle la pluralité de valeurs de capteur numérisées sont pondérées ou mises à l'échelle.

9. Une tête de lecture de codeur selon l'une quelconque des revendications précédentes, comprenant un générateur de position absolue (402), le générateur de position absolue (402) étant agencé pour recevoir les valeurs de capteur numérisées en série, analyser les valeurs de capteur numérisées et générer une sortie de position absolue.

10. Une tête de lecture de codeur selon la revendication 9, dans laquelle une première puce (300) comprend le détecteur, la pluralité de convertisseurs analogique-numérique (304), ainsi que le processeur de position incrémentielle, et une seconde puce comprend le générateur de position absolue (402).

11. Une tête de lecture de codeur selon l'une quelconque des revendications précédentes, dans laquelle le détecteur comprend un détecteur optique ayant un réseau d'éléments de détection de lumière (302).

12. Une tête de lecture de codeur selon la revendication 11, dans laquelle le détecteur optique comprend un réseau de détecteurs optiques unidimensionnels, et la tête de lecture est configurée pour acquérir des images instantanées de la règle du codeur.

13. Une tête de lecture de codeur selon l'une quelconque des revendications 10 à 11, dans laquelle le détecteur optique est formé en utilisant une technologie complémentaire métal-oxyde-semiconducteur, c'est-à-dire CMOS.
